# EUROPEAN PATENT APPLICATION

(11) **EP 4 726 458 A1**
(43) Date of publication of application: **15.04.2026**
(21) Application number: 24306653.7
(22) Date of filing: 09.10.2024
(51) Int. Cl.: G02B 27/00, G02B 27/01, G02B 27/28, G02C 11/00, G02B 7/28

(54) **SYSTEM AND METHOD FOR CHARACTERIZING A GAZE DISTANCE**

(71) Applicant: Essilor International, 94220 Charenton-le-Pont (FR)
(72) Inventor: TRANVOUEZ-BERNARDIN, Delphine, 14000 Caen (FR); GUEGAN, Julien, 94160 Saint-Mandé (FR); BARANTON, Konogan, 75012 Paris (FR); LE CAIN, Aurélie, 94000 Créteil (FR); DEBIEUVRE, Amandine, 75012 Paris (FR)
(74) Representative: Plasseraud IP

(57) **Abstract**

A system comprises a head-mountable device (10) and at least one sensing unit (14). The at least one sensing unit (14) is configured for obtaining a value of at least one feature of a motion of a head of a wearer, and a data processing unit (15) of the head-mountable device (10) is configured for determining a characterization of a gaze distance of the wearer from at least the value of the at least one feature of the motion. In preferred embodiments, the sensing unit may be an inertial measurement unit, and the data processing unit may be of neuron network type, in particular of multilayer perceptron type.

## Description

The disclosure relates to a system and to a method for characterizing a gaze distance.

### -- PRIOR ART --

Numerous applications require knowledge of a current gaze distance of a wearer who is equipped with a head-mountable device on his head. For example, characterization of the gaze distance would be useful for functions such as real-time control of presbyopia compensation, myopia control and display of augmented-reality information within a vision field of the wearer.

To this purpose, it has already been proposed providing the head-mountable device with a time-of-flight sensor. Such sensor measures the round-trip propagation time of radiation between the sensor and an object which is situated in a measurement direction. Because this measurement direction most of time does not match the gaze direction of the wearer, the measurement result does not relate to the current gaze distance of the wearer. Indeed, the gaze distance is the distance from the head of the wearer to an object that is situated in the gaze direction and which is currently stared at by the wearer. Put another way, devices with range measurement direction independent from the current gaze direction of the wearer do not suit real-life behaviour in particular due to the wearer possibly rotating his eyes. In addition, dimensions and weight of time-of-flight sensors make it difficult to embed them in head-mountable devices so that these devices remain lightweight and aesthetic.

Other proposed devices for determining the gaze distance while alleviating the issue of eye rotation are based on determining the respective orientations of both eyes of the wearer. But such devices require multiple sensors, and most often additional light sources, so that they are power-consuming and difficult to arrange in head-mountable devices while addressing the weight and aesthetics issues.

Still other devices have been proposed that are based on measurements of the orientation of the head of the wearer. Suitable sensors or sensor combinations provide characterization of the angular position of the wearer's head in real-time. But many situations exist where one same orientation of the wearer's head corresponds to different values of the gaze distance. For example, vertical posture of the head corresponds to the wearer walking and looking straight ahead in far vision condition, but also corresponds to the wearer being stationary and reading an information sheet on a vertical pinboard in near vision condition.

For suppressing such ambiguities, still other proposed devices implement stereo image sensors for acquiring a knowledge of a content of at least part of an environment of the wearer. Then, a map of the environment content is combined with the characterization of the current gaze direction of the wearer for characterizing the gaze distance. But such devices are complex and require again determining the current gaze direction of the wearer.

An object of this disclosure consists in providing a system that is capable of characterizing the gaze distance while being lightweight and aesthetic and more reliable than already known devices.

### - SUMMARY OF THE DICLOSURE --

For meeting at least one of these objects or others, a first aspect of this disclosure proposes a system that comprises a head-mountable device and at least one sensing unit, in which the head-mountable device is configured for determining a characterization of a gaze distance of a wearer. In addition:
- the at least one sensing unit is configured for obtaining a value of at least one feature of a motion of a head of the wearer, the at least one feature belonging to a list comprised of at least one translational speed component, at least one rotational speed component, at least one translational acceleration component and at least one rotational acceleration component, during a use of the head-mountable device by the wearer; and
- the head-mountable device comprises a data processing unit that is configured for determining the characterization of the gaze distance from at least the value of the at least one feature of the motion.

The system is sensitive to motion of the head of the wearer and in this way collects information which is enriched compared to the already proposed systems, in particular those based on measurements of the position of the head of the wearer, for characterizing the gaze distance in a more reliable way.

In addition, both the at least one sensing unit and the data processing unit that are implemented in the proposed system can be lightweight, small and low power-consuming. Therefore, they can be integrated in the system such that this system remains light and aesthetic.

Preferably, the at least one sensing unit may be integrated in the head-mountable device or affixed to the head-mountable device. Thus, the head-mountable device incorporating the at least one sensing unit and the data processing unit forms an autonomous device such that its use is easier, in particular in real-life conditions. Advantageously, the system, or its head-mountable device, may further comprise a battery which is electrically connected to the at least one sensing unit and to the data processing unit.

In preferred embodiments, the at least one sensing unit, and possibly also the data processing unit, may be embedded in a frame of the head-mountable device, or affixed to the frame of the head-mountable device, or embedded in a lens of the head-mountable device. Compact and aesthetic design is thus possible for the head-mountable device.

Preferably, the at least one sensing unit may comprise an inertial measurement unit, also commonly referred to as IMU, or a magnetic sensor or both. Such sensing units are lightweight, small and low power-consuming. In addition, they provide values of motion features with sufficient accuracy.

Generally for the invention, the data processing unit may be configured for determining the characterization of the gaze distance in real time with respect to the motion of the head of the wearer. The system is thus compatible and useful with a great number of applications.

In various embodiments, the characterization of the gaze distance may be a value of the gaze distance or a range of the gaze distance. In the latter case, commonly referred to as classification, the range of the gaze distance may be selected among a near vision distance range, an intermediate vision distance range and a far vision distance range.

Again generally for the invention, the data processing unit may be configured for determining the characterization of the gaze distance by using at least one additional data that belongs to an additional list comprised of at least one orientation angle of the head of the wearer, ametropia data of the wearer, presbyopia data of the wearer, eye-head coordination data of the wearer, binocular profile data of the wearer, a current time and/or a current date, at least one frequency value relating to the motion of the head of the wearer, at least one phase value relating to the motion of the head of the wearer, at least one gain value computed between the at least one translational speed component and the at least one rotational speed component, and a current activity of the wearer. The at least one orientation angle of the head of the wearer may be a yaw and/or a pitch of the head of the wearer, corresponding to angles of the orientation of the head of the wearer in horizontal plane and vertical plane, respectively, when a sagittal plane of the head is vertical. The at least one frequency value relating to the motion of the head of the wearer may be bouncing and sway frequencies, or parameters characterizing the wearer being reading such as a saccade frequency. Possibly, at least some of the additional data used by the data processing unit for determining the characterization of the gaze distance may be derived from successive values of the feature of the motion of the head of the wearer, for example through integration over time or spectral analysis.

Again generally for the invention, the data processing unit may be of neuron network type, preferably of multilayer perceptron type, even more preferably with at least twenty neurons per layer.

Depending on applications for the system, it may further comprise:
- a variation system suitable for varying a value of at least one parameter of the head-mountable device based on the characterization of the gaze distance.
In such cases, the data processing unit may be further configured for controlling the variation system to vary the value of the at least one parameter of the head-mountable device based on the characterization of the gaze distance, preferably in real time with respect to the motion of the head of the wearer. Advantageously, the variation system may also be embedded in the frame or the lens of the head-mountable device or affixed thereto.

In some embodiments, the at least one parameter that is varied may comprise at least one ophthalmic parameter effective when the wearer is looking through the head-mountable device. This parameter may then be selected in a list comprised of an optical power value of at least one glass of the head-mountable device, an optical power distribution across the at least one glass of the head-mountable device, a myopia control feature of the head-mountable device, and an image distance of at least one visual sign that is displayed by the head-mountable device to produce augmented reality for the wearer.

In other embodiments where the head-mountable device further comprises an image capturing device, the variation system may be a zoom system or an autofocus system of the image capturing unit. Then, the at least one parameter of the head-mountable device that is varied may comprise a magnification value of the zoom system or a focal length of the autofocus system. For such other embodiments, the image capturing unit may advantageously be embedded in the frame of the head-mountable device or affixed thereto.

A second aspect of the present disclosure proposes a method for determining a characterization of a gaze distance of a wearer, which method comprises:
- obtaining a value of at least one feature of a motion of a head of the wearer, the at least one feature belonging to a list comprised of at least one translational speed component, at least one rotational speed component, at least one translational acceleration component and at least one rotational acceleration component; and
- determining the characterization of the gaze distance from at least the value of the at least one feature of the motion.

This method may be implemented using a system as provided by the first aspect of the present disclosure. To this end, the head-mountable device is fitted on the head of the wearer

Preferably, the characterization of the gaze distance may be determined by the data processing unit through implementing a model previously trained using labelled data.

When the system comprises a variation system suitable for varying a value of at least one parameter of the head-mountable device, the method may further comprise varying this value based on the characterization of the gaze distance.

The method may also comprise using the characterization of the gaze distance for at least one of the following applications:
- determining an ergorama of the wearer, that connects gaze directions to gaze distance values;
- determining a correlation between fitting measurements of an equipment carried out in a shop and a pitch of the head of the wearer, in particular for far vision;
- determining ergonomics features related to the wearer, in particular at least one fitting value to be used for fitting an ophthalmic equipment on the head of the wearer;
- characterizing respective durations of activities practiced by the wearer that involve differing eye convergence levels, in particular for selecting parameters of an eyewear to be provided to the wearer which is optimized for the activity with longest duration;
- determining a statistical characterization of the gaze distance of the wearer, and providing the wearer with an ametropia compensating equipment or a presbyopia compensating equipment that is selected based on the statistical characterization of the gaze distance; and
- adjusting at least one acoustic parameter involved with a production of sound, in particular a three-dimensional sound, based on the characterization of the gaze distance, and producing the sound using the at least one adjusted acoustic parameter.

These and other features will be now described with reference to the appended figures, which relate to preferred but not-limiting embodiments.

### -- BRIEF DESCRIPTION OF THE DRAWINGS --

Figure 1 is a perspective view of a system according to an embodiment of the present disclosure.
Figure 2 shows connections between components of the system of Figure 1.
Figure 3 displays gaze distance values which have been determined by a system according to an embodiment of the present disclosure.

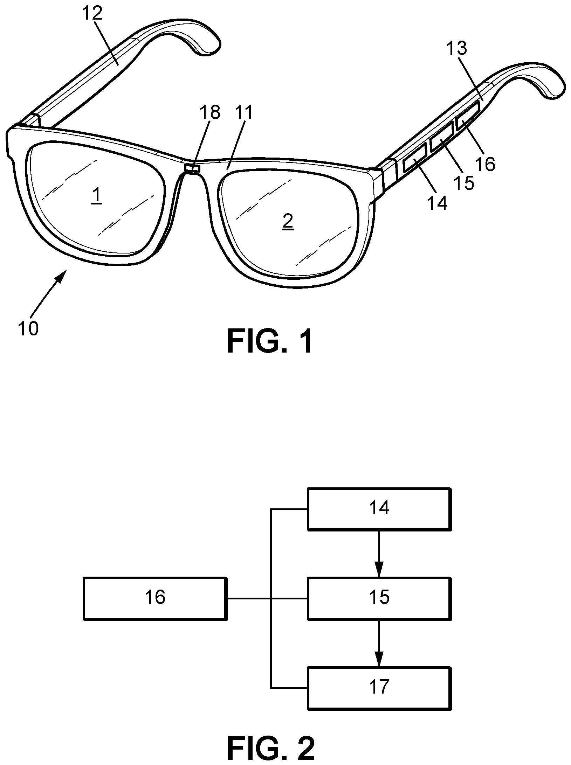

For clarity sake, element sizes which appear in Figure 1 do not correspond to actual dimensions or dimension ratios. Also, same reference numbers which are indicated in Figures 1 and 2 denote identical elements of elements with identical function.

### -- DETAILED DESCRIPTION OF EMBODIMENTS --

Referring to Figure 1, a head-mountable device 10 is of the type of eyeglasses. The eyeglasses may comprise lenses fitted in a frame 11. Reference numbers 1 and 2 denote both lenses, which are maintained in respective housings of the frame 11. The frame 11 may further comprise temples 12 and 13 suitable for maintaining the head-mountable device 10 on the head of a wearer, in a usual way. Although the present detailed description considers eyeglasses, it is obvious to adapt it to any other type of head-mountable device, such as a goggle with a single continuous glass common to both eyes of the wearer, for example. Reference numbers 14, 15 and 16 respectively denote a sensing unit, a data processing unit and a battery, which may advantageously all be integrated in the frame 11, for example in one or both temples 12, 13. As shown in Figure 2, the battery 16 is electrically connected to the sensing unit 14 and the data processing unit 15 for delivery of electrical power, thus enabling operation of the sensing unit 14 and data processing unit 15.

In the embodiment of Figure 1, all components of the system are incorporated in the head-mountable device 10, so that this latter forms the whole system. But it may not be so in other possible embodiments of the system, in which the sensing unit 14 and/or the battery 16 may be out of the head-mountable device 10 but electrically connected to it. Possibly, the sensing unit 14 may be shared by the system of the present disclosure and another equipment of the wearer, such as his smartphone.

In addition to the electrical connections for power delivery, an output of the sensing unit 14 is connected to an input of the data processing unit 15 so that signals containing measured values which are produced by the sensing unit 14 are transmitted to the data processing unit 15. Based on these measured values, the data processing unit 15 determines in real-time or almost real-time a characterization of a gaze distance that was effective for the wearer at the time when the values were measured by the sensing unit 14. The characterization of the gaze distance may consist in a distance value that relates to the measurement time. Alternatively, it may consist in indicating a distance range that is deemed to contain the value of the gaze distance. For example, the distance range may be selected between a short vision distance range such as 0.30 m (meter) to 0.60 m, an intermediate vision distance range such as 0.60 m to 2.0 m, and a far vision distance range such as distances longer than 2.0 m, for example 2.0 m to 200 m.

In possible improved embodiments, the head-mountable device 10 may further comprise a variation system 17 which is configured for varying at least one parameter of the head-mountable device 10. In such case, the data processing unit 15 may be further configured and electrically connected to control operation of the variation system 17, so that the parameter is automatically varied or adjusted based on the characterization of the gaze distance. A type of the variation system 17 may depend on a smart function that is provided by the head-mountable device 10.

In first embodiments where the variable parameter relates to the vision of the wearer, the variation system 17 may be arranged for varying at least one optical parameter of the lenses 1 and 2. For example, each of the lenses 1 and 2 may be designed for producing an optical power value which can be varied as a function of the characterization of the gaze distance. Such head-mountable device 10 especially suits for a presbyopic wearer. Embodiments of the variation system 17 that are suitable for such operation may be based for each lens 1, 2 on a liquid crystal layer which is intermediate between two electrodes or electrode arrays parallel to the lens. Alternatively but again for varying a vision parameter of the head-mountable device 10, the variation system 17 may suit for varying a distribution of optical power throughout the area of each lens 1,2. Such variation system 17 may also be based on a liquid crystal layer for each lenses. It may enable adjusting optical power values that are effective in peripheral parts of each lens 1, 2, based on the characterization of the gaze distance, for example for optimizing peripheral vision or reducing aberrations existing for the foveal vision. Still another function that implements a variable vision parameter is myopia control.

In second embodiments, the head-mountable device 10 may be designed to display information signs, for example augmented-reality information, within the vision field of the wearer through the lenses 1 and 2. For these signs to appear sharp to the wearer, they may be produced as virtual light sources which are located ahead from the wearer's eyes in accordance with the characterization of the current gaze distance of the wearer. Then, the parameter which is adjusted by the variation system 17 is a focusing distance of an imaging unit that is used for producing the displayed information signs. Such imaging unit may be incorporated in at least one of the temples 12 and 13, and optically connected to reflecting elements incorporated in the lens(es) 1 and/or 2 for bringing the displayed information signs to desired locations within the vision field of the wearer.

In third embodiments, the head-mountable device 10 may further comprise an image capturing unit 18 (see in Figure 1) which is preferably supported by the frame 11, in a front part thereof and oriented straight ahead. When this image capturing unit 18 is dedicated to capturing elements of the wearer's environment that are currently stared at by the wearer of the head-mountable device 10, a focal length of the image capturing unit 18 may be adjusted in accordance with the characterization of the gaze distance. To this end, the image capturing unit 18 may comprise an autofocus system which is controlled by the data processing unit 15 to produce a focus length value which matches the characterization of the gaze distance. The autofocus system thus forms the variation system 17 in such third embodiments. Alternatively or in combination, the image capturing unit 18 may comprise a zoom system forming another variation system 17. Then, the parameter which is varied by the zoom system under control by the data processing unit 15 is a magnification value of the zoom system.

Preferably, the sensing unit 14 comprises an inertial measurement unit, commonly referred to as IMU, or a magnetic sensor, or both. An advantage of combining an inertial measurement unit with a magnetic sensor is providing measured values with improved accuracy for the features of the motion of the wearer's head. Structures and operations of the inertial measurement unit and the magnetic sensor are well known. As a reminder, an inertial measurement unit may be based on a combination of several oscillators which are sensitive to translational acceleration components or rotational speed components, which then constitute the features of the motion of the head of the wearer. The translational acceleration components sensed by the inertial measurement unit may be a vector sum of the gravity acceleration and inertial acceleration components relating to the motion. A magnetic sensor is usually sensitive to variations in orientation with respect to an external magnetic field, such as the terrestrial magnetic field. Models of inertial measurement units and/or magnetic sensors which are commercially available may be used.

The data processing unit 15 may be of any type. It is configured for determining the characterization of the gaze distance of the wearer of the head-mountable device 10 from the values of the motion feature(s) measured by the sensing unit 14. Preferably, the data processing unit 15 may be of neuron network type, in particular of multilayer perceptron type. The neuron network of perceptron type may have at least twenty neurons per layer but preferably a low number of neuron layers. The low number of neuron layers suits for obtaining short computation times which are compatible with real-time operation of the head-mountable device 10, whereas a high-enough number of neurons per layer improves the reliability of the outputted characterizations of the gaze distance. Such data processing unit 15 of neuron network type suits for implementing a model which has been previously trained using labelled data. Such model connects values of each motion feature to characterizations of the gaze distance, in particular of the distance value type or of the classification type as described above. Alternatively, the data processing unit 15 may be of a type suitable for implementing regression, either linear or polynomial regression.

According to the present disclosure, the values that are provided by the sensing unit 14 to the data processing unit 15 for this latter to infer the characterization of the gaze distance, relate to one or several feature(s) of a currently occurring motion of the wearer's head. Generally, each of these features may be a translational or rotational speed component or a translational or rotational acceleration component of the wearer's head as directly outputted by the sensing unit 14. Possibly, the data processing unit 15 may use additional values and/or additional data for determining the characterization of the gaze distance. Such additional values may be calculated first by the data processing unit 15 from those produced by the sensing unit 14, and then be used in a next step for determining the characterization of the gaze distance. Examples of such additional values also relating to motion features are:
pitch and yaw variations, calculated by integrating the rotational speed or acceleration values over time,
sway components, relating to periodic horizontal translational motions, and bouncing components, relating to periodic vertical translational motions, including amplitude and frequency values possibly calculated by Fourier or Hilbert transforms of the translational speed or acceleration values over time, and
gain values, each computed as a ratio between one of the translational speed components and one of the rotational speed components.
The sway and bouncing components may be used for identifying the current activity of the wearer. For example, the wearer being walking or climbing stairs can be detected by applying low-pass filtering with frequency upper limit such as 1.5 Hz, and analyzing sway and bouncing amplitudes of the filtered spectral components. The gain values may also be used for identifying that the wearer is currently walking along a curved trajectory or is currently leaning. Similarly, analysis of the sway and bouncing components, or of saccade components, allows identifying that the wearer is currently reading. Thus, these additional features may be useful for identifying the current activity of the wearer, and this activity may constitute an additional data used by the data processing unit 15 to characterize the gaze distance. Indeed, walking and reading most often correspond to far vision distance range and near vision distance range, respectively.

Other additional data possibly used by the data processing unit 15 for inferring the characterization of the gaze distance may be at least one orientation angle of the wearer's head, wearer's ametropia and/or presbyopia data, wearer's eye-head coordination data, wearer's binocular profile data, current time, date and/or day in the week. If a periodic motion component is identified by the data processing unit 15 from the values transmitted by the sensing unit 14, the current time value may be transformed into a phase value with respect to the periodic motion component, and this phase value may be used by the data processing unit 15 as another additional value.

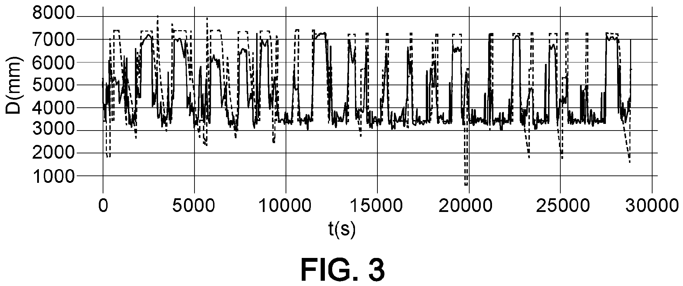

Figure 3 is a time-diagram which compares gaze distance values as determined by the data processing unit 15 with actual values. The horizontal axis indicates time denoted t and expressed in seconds (s), and the vertical axis indicates the gaze distance values, denoted D and expressed in millimeters (mm). The curve with interrupted line corresponds to actual gaze distance values, and the curve with continuous line corresponds to predicted values outputted by the data processing unit 15. For this test, the data processing unit 15 comprises a neuron network of perceptron type with two layers of twenty neurons each. The sensing unit 14 was an inertial measurement unit, and the motion features concerned with the values transmitted by the sensing unit 14 to the data processing unit 15 were rotational speed components. The data processing unit 15 first integrated the values of each rotational speed component over time to obtain pitch values and yaw values both as functions of time t. The pitch and yaw values were then used by the neuron network to output the predicted values of the gaze distance D. The training of the model used 123 000 labelled data produced from twelve wearers. It appears from the diagram of Figure 3 that the head-mountable device 10 well predicts the steep transitions in the values of the gaze distance D, although the predicted values exhibit some noise.

Further to the applications already mentioned, characterizing the gaze distance as disclosed herein is also useful for the following tasks:
- for an identified person, assessing values of his gaze distance for a number of gaze directions. The gaze distance values are collected by equipping the person with the head-mountable device 10, and the gaze directions can be obtained by using known systems such as eye-trackers combined with devices for detecting the orientation of the wearer's head. The so-obtained relationship between the gaze directions and the gaze distance values is commonly referred to as an ergorama. It is useful for many purposes, in particular determining a design of progressive addition lenses that suits the behavior of the person. Better comfort for the person using the progressive addition lenses can be provided in this way;
- again for an identified person, using the head-mountable device 10 with him allows determining fitting values to be used for an ophthalmic eyewear intended to this person, so as to better suit the visual and postural behavior of the person; and
- using the head-mountable device 10 may help in providing a more immersive experience for a person who is listening to three-dimensional sound in connection with a visual scene he is looking at.

## Claims

1. A system comprising a head-mountable device (10) and at least one sensing unit (14), the head-mountable device (10) being configured for determining a characterization of a gaze distance of a wearer,
- the at least one sensing unit (14) being configured for obtaining a value of at least one feature of a motion of a head of the wearer, the at least one feature belonging to a list comprised of at least one translational speed component, at least one rotational speed component, at least one translational acceleration component and at least one rotational acceleration component; and
- the head-mountable device (10) comprising a data processing unit (15) configured for determining the characterization of the gaze distance from at least the value of the at least one feature of the motion.

2. The system of claim 1, wherein the at least one sensing unit (14) is integrated in the head-mountable device (10) or affixed to the head-mountable device.

3. The system of claim 2, wherein the at least one sensing unit (14) is embedded in a frame (11) of the head-mountable device, or affixed to the frame of the head-mountable device, or embedded in a lens (1, 2) of the head-mountable device.

4. The system of one of the preceding claims, wherein the at least one sensing unit (14) comprises an inertial measurement unit or a magnetic sensor or both.

5. The system of one of the preceding claims, wherein the data processing unit (15) is configured for determining the characterization of the gaze distance in real time with respect to the motion of the head of the wearer.

6. The system of one of the preceding claims, wherein the characterization of the gaze distance is a value of the gaze distance or a range of the gaze distance, the range of the gaze distance being selected among a near vision distance range, an intermediate vision distance range and a far vision distance range.

7. The system of one of the preceding claims, wherein the data processing unit (15) is configured for determining the characterization of the gaze distance by using at least one additional data that belongs to an additional list comprised of at least one orientation angle of the head of the wearer, ametropia data of the wearer, presbyopia data of the wearer, eye-head coordination data of the wearer, binocular profile data of the wearer, a current time and/or a current date, at least one frequency value relating to the motion of the head of the wearer, at least one phase value relating to the motion of the head of the wearer, at least one gain value computed between the at least one translational speed component and the at least one rotational speed component, and a current activity of the wearer.

8. The system of one of the preceding claims, wherein the data processing unit (15) is of neuron network type, preferably of multilayer perceptron type, even more preferably with at least twenty neurons per layer.

9. The system of one of claims 1 to 8, further comprising:
- a variation system (17) suitable for varying a value of at least one parameter of the head-mountable device (10) based on the characterization of the gaze distance,
and wherein the data processing unit (15) is further configured for controlling the variation system (17) to vary the value of the at least one parameter of the head-mountable device (10) based on the characterization of the gaze distance, preferably in real time with respect to the motion of the head of the wearer.

10. The system of claim 9, wherein the at least one parameter of the head-mountable device comprises at least one ophthalmic parameter effective when the wearer is looking through the head-mountable device.

11. The system of claim 10, wherein the at least one ophthalmic parameter is selected in a list comprised of an optical power value of at least one glass (1, 2) of the head-mountable device, an optical power distribution across the at least one glass of the head-mountable device, a myopia control feature of the head-mountable device, and an image distance of at least one visual sign that is displayed by the head-mountable device to produce augmented reality for the wearer.

12. The system of claim 9, further comprising:
- an image capturing unit (18),
wherein the variation system is a zoom system or an autofocus system of the image capturing unit (18), and the at least one parameter of the head-mountable device (10) comprises a magnification value of the zoom system or a focal length of the autofocus system.

13. A method for determining a characterization of a gaze distance of a wearer, the method comprising:
- obtaining a value of at least one feature of a motion of a head of the wearer, the at least one feature belonging to a list comprised of at least one translational speed component, at least one rotational speed component, at least one translational acceleration component and at least one rotational acceleration component; and
- determining the characterization of the gaze distance from at least the value of the at least one feature of the motion.

14. The method of claim 13, implemented using a head-mountable device (10) according to one of claims 9 to 12, and the method further comprises varying the value of the at least one parameter of the head-mountable device based on the characterization of the gaze distance.

15. The method of claim 13, further comprising using the characterization of the gaze distance for at least one of the following applications:
- determining an ergorama of the wearer, that connects gaze directions to gaze distance values;
- determining a correlation between fitting measurements of an equipment carried out in a shop and a pitch of the head of the wearer;
- determining ergonomics features related to the wearer, in particular at least one fitting value to be used for fitting an ophthalmic equipment on the head of the wearer;
- characterizing respective durations of activities practiced by the wearer that involve differing eye convergence levels;
- determining a statistical characterization of the gaze distance of the wearer, and providing the wearer with an ametropia compensating equipment or a presbyopia compensating equipment that is selected based on the statistical characterization of the gaze distance; and
- adjusting at least one acoustic parameter involved with a production of sound, based on the characterization of the gaze distance, and producing the sound using the at least one adjusted acoustic parameter.
